# EUROPEAN PATENT APPLICATION

(11) **EP 2 139 211 A1**
(43) Date of publication of application: **30.12.2009**
(21) Application number: 08305339.7
(22) Date of filing: 27.06.2008
(51) Int. Cl.: H04M 1/725, G06K 19/07

(54) **System and method of extending smart card capability via a coupling with a portable electronic device**

(71) Applicant: Axalto S.A., 92190 Meudon (FR)
(72) Inventor: Thill, Michel, 78340 Les Clayes Sous Bois (FR); Marseille, François-Xavier, 78160 Marly le Roi (FR)
(74) Representative: Scheer, Luc

(57) **Abstract**

The invention is a portable host machine comprising a smart card and a connector. The connector has a set of pads able to communicate through a first protocol. The smart card has at least a first pad able to communicate using a second protocol. The connector has at least an additional pad able to communicate using the second protocol. The first and additional pads are privately linked into said portable host machine.
In one embodiment there is a wired direct link provided between the SIM card of a mobile phone and a connected external memory card in order to increase the available memory for the SIM card.

## Description

### (Field of the invention)

The present invention relates to systems and methods of extending capability of a smart card via a coupling with a portable electronic device. It relates particularly to methods of extending capability of a SIM card by pairing the SIM card with a device able to communicate with the Secure Digital protocol. In particular, the present invention is well suited for extending the size of the memory managed by a SIM card and for adding new communication channels to the SIM card.

### (Prior art)

SIM cards comprise a memory with a size that may reach up to several hundred Megabytes. Memory cards like USB token or SD (also named Secure Digital ®) card may comprise a memory with a size that may reach up to several Gigabytes. On one hand the SIM life cycle is several years long, on the other hand new generations of memory cards occur each year. The memory cards may be SD cards or MMC cards for example. Part of the new SIM applications requires more and more memory size. Thus there is a need for increasing the size of the SIM memory while the SIM card is still used on the field.

A part of existing mobile phone has a NFC circuit allowing NFC communications between the mobile phone and a distant machine. When a SIM card is inserted in such a mobile phone, the communication between the SIM card and distant machines relies on a NFC channel provided by the mobile phone via SWP link according to a recent release of ETSI standard. This NFC capability via SWP is a preliminary way to extend outside communication. Nevertheless a problem is to extend SIM memory on field in order to take benefits of new generation of memory chips. Another problem is to extend SIM communication capabilities of a SIM.

### (Summary of the Invention)

An object of the invention is to solve the above mentioned technical problems. The invention provides a solution for coupling a smart card with an external device in order to extend the smart card capabilities.

The object of the present invention is a portable host machine comprising a smart card and a connector. The connector has a set of pads capable of communicating through a first protocol. The smart card has at least a first pad capable of communicating using a second protocol. Said connector comprises at least an additional pad able to communicate using the second protocol. First and additional pads are privately linked into the portable host machine.

Advantageously, the portable host machine may comprise a NFC controller. The NFC controller may comprise first and second ports capable of communicating using the second protocol. The NFC controller may comprise a means capable of routing data between first and second ports. The first and additional pads may be linked via the NFC controller.

In a preferred embodiment, the connector may be a MicroSD ® connector or a MicroSDHC ® connector.

In a preferred embodiment, the portable host machine may be a telecom handset and the smart card may be a SIM card.

Advantageously, the second protocol may be a single wire protocol and may be a full duplex protocol.

In a preferred embodiment, the protocol may be of SWP type.

Another object of the invention is a portable electronic device intended to be connected to a portable host machine according to the above-described type. The portable electronic device is intended to be paired with a smart card connected to the portable host machine. The portable electronic device comprises a non volatile memory. The non volatile memory comprises first and second areas. The portable electronic device comprises a sharing means able to set the size of the first area according to a request sent by the paired smart card.

Advantageously, the portable electronic device may be intended to be connected to a connector having a set of pads capable to communicate through a first protocol. The connector may have at least an additional pad able to communicate using a second protocol. The portable electronic device may comprise a first port capable of communicating using the first protocol. The portable electronic device may comprise a second port able to communicate using the second protocol.

In a preferred embodiment, the non volatile memory may comprise a third area. The sharing means may be able to set the size of the third area according to a request sent by the paired smart card. The third area may be accessible through the second port only. Said first and second areas may be accessible through the first port.

Advantageously, the portable electronic device may comprise security means capable of refusing a pairing request sent by a smart card distinct from the paired smart card.

In a preferred embodiment, the second protocol may be of SWP type.

Advantageously, the portable electronic device may comprise a third port. The third port may be capable of communicating through a contactless channel, a vocal channel or a visual channel. The portable electronic device may comprise an interface controller and a communication controller. The third port may be linked to the second port via both said interface controller and said communication controller.

In a preferred embodiment, the first protocol may be of Secure Digital ® type.

Advantageously, the portable host machine may comprise a NFC controller. The second port may be used for communication exchanges between the portable electronic device and both the paired smart card and said NFC controller.

Another object of the invention is a smart card intended to be inserted in a portable host machine of the above-described type. A portable electronic device of the above-described type is intended to be connected to the portable host machine. The smart card comprises pairing means capable of pairing the smart card with the portable electronic device.

Advantageously, the portable electronic device may comprise a non volatile memory. The non volatile memory may comprise first and second areas. The smart card may comprise a management means capable of accessing the first area of said portable electronic device.

Another object of the invention is a method of managing data. A smart card is connected to a portable host machine of the above-described type. A portable electronic device of the above-described type is connected to the portable host machine. The method comprises the following steps:
- in the portable host machine, activating a private hardware link between the smart card and the portable electronic device,
- pairing the smart card and the portable electronic device,
- using the private hardware link for all data exchanges between the smart card and the portable electronic device.

Advantageously, the method the portable electronic device may comprise a non volatile memory. The non volatile memory may be intended to comprise first, second and third areas. The method may comprise the further steps:
- in the smart card, defining a size for the first area of the portable electronic device,
- assigning the size defined by the smart card to the first area of the portable electronic device.

Advantageously, the method may comprise the further steps:
- storing first data into the smart card,
- transferring first data from the smart card to the first area and/or the third area.

The method may also comprise the further steps:
- storing second data into the second area, the first data may comprise digital rights related to the second data,
- plugging the portable electronic device to a second host machine,
- using second data thanks to the first data.

Advantageously, the method may comprise the further steps:
- storing the second data into the smart card,
- transferring the second data from the smart card to the second area.

Advantageously, the method may comprise the further step of transferring the second data from the second area to the smart card and/or transferring the first data from the portable electronic device to the smart card.

Another object of the invention is a method of exchanging data between a remote machine and a smart card of the above-described type. The smart card is connected to a portable host machine of the above-described type. A portable electronic device of the above-described type is connected to the portable host machine. The method comprises the step of exchanging data between the smart card and the remote machine through the portable electronic device. The data is sent and received by the smart card through a private hardware link, and said data is sent and received by the remote machine through a contactless channel, a vocal channel or a visual channel.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of a first embodiment of a mobile phone according to the invention;
- Figure 2 depicts schematically an example of a second embodiment of a mobile phone according to the invention;
- Figure 3 depicts schematically an example of architecture of a first portable electronic device intended to be coupled with a smart card according to the invention;
- Figure 4 depicts schematically an example of architecture of a smart card according to the invention;
- Figure 5 depicts a step sequence for pairing a smart card with a portable electronic device according to the invention;
- Figure 6 depicts a use case of smart card memory extension according to the invention; and
- Figure 7 depicts schematically an example of architecture of a portable electronic device intended to be coupled with a smart card according to a second embodiment of the invention;

### (Detailed description of the preferred embodiments)

The invention may apply to any types of smart cards connected to a mobile device. To demonstrate the invention, the cases described here after are related to a specific case where the smart card is a SIM card.

The invention may be implemented with any types of protocol which could be a half or a full duplex protocol, the only constraint is related to the number of wires used to implement this protocol, one or two wires protocols are the most convenient ones. In the cases described here after, the single wire protocol is a preferred embodiment.

The invention may apply to any types of mobile phone but it could be any other kind of host machine able to connect a Smart Card. In this specification, the three wordings "mobile phone", "mobile terminal equipment" and "telecom handset" are equivalent.

An advantage of the invention is to provide a system and a method for extending the memory available for a smart card inserted in a mobile phone. The invention allows extending the size of the memory managed by a smart card while the smart card is on the field. In other words the size of the memory managed by a smart card may be increased after the smart card issuing, thanks to a specific assignment of a paired memory area belonging to a portable electronic device.

Another advantage of the invention is to allow mobility for a part of content stored in the memory managed by a smart card inserted in a mobile phone. Data stored by the smart card in the paired memory area may be used through another host machine while the smart card remains inserted in the mobile phone.

An additional advantage of the invention is to provide a system and a method for increasing the number of communication channels available for a smart card inserted in a mobile phone. In particular the invention allows additional communication channels independently of the used mobile phone applications thanks to the direct link that allows a direct Smart Card control to the paired device part. That means, no specific hardware software development in Mobile Phone other than establish SWP link between Smart Card and paired device is required.

Another advantage of the invention is to minimize the required upgrade for the existing hardware devices.

An additional advantage of the invention is to provide a solution allowing keeping the Smart card compliant with current standards of the smart card domain. For example a SIM may remain compliant with current standards of the Telecom domain.

A microSD connector must have at least height pads. Such a connector may have two additional pads intended to be connected to an antenna in conformity with standard upgrade microSD Card Addendum Version 2.00 to Physical Layer Specifications.

The SWP protocol is a full duplex protocol which requires only one wire. The NFC standard is a contactless communication standard. NFC stands for Near Field Communication. The SWP protocol has been developed for the communication between a smart card and a NFC circuit. The SWP protocol is defined in ETSI standard, in particular in the ETSI TS 102 613 v7.1.0 (2008-02).

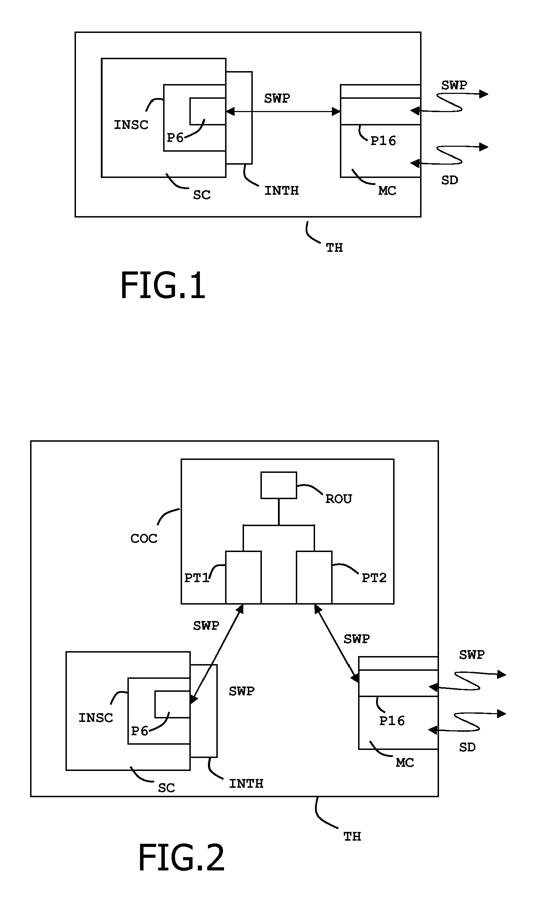

**Figure 1** shows an example of telecom handset architecture according to a first embodiment of the invention.

The telecom handset TH comprises a working memory and a communication interface INTH dedicated to SIM card. A SIM card SC is connected to the mobile phone through the interface INTH. The SIM card comprise an interface INSC having eights pads according to ISO 7816-2 standard. A pad P6 of the interface INSC is dedicated to a single wire protocol of SWP type. In a preferred embodiment, the pad P6 is the contact C6 of the SIM card according to ISO 7816-2 standard. The telecom handset TH comprises a second communication interface SD. The SWP interface and the SD interface are connected to a MC (MicroSD connector) that has at least 9 connection points (8 for SD and one for SWP). In the embodiment of Figure 1, a direct link is set between the pad P6 of the SIM card and the pad P16 of the MicroSD ® connector MC through the communication interface INTH. The pad P16 is one of the additional pads of the MicroSD ® connector MC dedicated to the SWP protocol.

**Figure 2** shows a second example of telecom handset architecture according to a preferred embodiment of the invention.

The telecom handset TH comprises a communication interface INTH and a MicroSD ® connector MC as described above. In addition, the mobile phone TH comprises a NFC circuit COC. The NFC circuit COC comprises two ports PT1 and PT2 able to communicate using the single wire protocol of SWP type. Both ports PT1 and PT2 are linked to routing means ROU able to route communication flows between ports PT1 and PT2 in conformity with HCI (Host Controller Interface) part defined in the ETSI standard, in particular in the ETSI TS 102 622 v7.0.0 (2008-02). Routing means ROU is able to route data coming from port PT1 and data coming from PT2. The port PT1 is linked to the pad P6 of the SIM card through the communication interface INTH. The port PT2 is linked to the pad P16 of the MicroSD ® connector MC. Thus the NFC circuit COC establishes a gateway between the SIM card SC and the MicroSD ® connector MC, thanks to the routing capability of HCI ETSI standard. In consequence the SIM card and a SD device plugged into the MicroSD ® connector MC may communicate using the SWP protocol. Moreover such a communication does not require any action or service from the mobile phone, except the power supply.

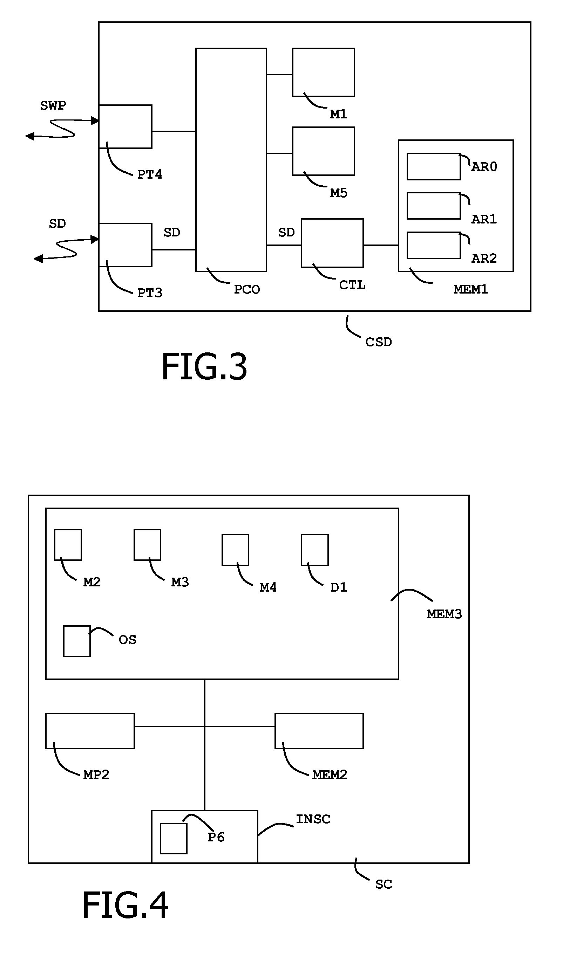

**Figure 3** shows the architecture of a portable electronic device CSD according to a first embodiment of the invention.

The portable electronic device CSD comprises two ports PT3 and PT4. The port PT3 is intended to communicate by using the Secure Digital ® protocol. The port PT4 is intended to communicate by using the SWP protocol. The portable electronic device CSD comprises a controller PCO linked to the two ports PT3 and PT4. The controller PCO is able to treat data coming from and going to the port PT3 through the Secure Digital ® protocol. The controller PCO is able to treat data coming from and going to the port PT4 through the SWP protocol. The portable electronic device CSD comprises a memory controller CTL linked to the controller PCO. Data is exchanged between the controller PCO and the memory controller CTL by using the Secure Digital ® protocol. The portable electronic device CSD comprises a memory MEM1 linked to the memory controller CTL. The memory MEM1 is a non volatile memory. In a preferred embodiment the memory MEM1 is of flash type.

The portable electronic device CSD is intended to be connected to a mobile phone TH having a MicroSD ® connector MC. The portable electronic device CSD is intended to be paired with a SIM card SC inserted in the mobile phone.

The portable electronic device CSD comprises sharing means M5 able to identify two areas AR1 and AR2 into the memory MEM1. The sharing means M5 is activated when a pairing operation is carried out between the portable electronic device CSD and a SIM card inserted in the mobile phone TH. The size of the area AR1 is set by the sharing means M5 according to data sent by the SIM card during the pairing operation. In a preferred embodiment the size of the area AR2 is equal to the remaining memory MEM1 size. In this case the sum of size of area AR1 plus the size of area AR2 is equal to the whole MEM1 size.

The portable electronic device CSD comprises security means M1 able to authorize or refuse access to area AR1 of the memory MEM1.

After a successful pairing operation, the memory MEM1 comprises two areas AR1 and AR2. The area AR1 is accessible through both ports PT3 and PT4.

A host machine may access the area AR2 through both ports PT3 and PT4.

Advantageously, the sharing means M5 may be able to identify a third area AR0 into the memory MEM1. The size of the area AR0 may be set by the sharing means M5 according to data sent by the SIM card. A request for accessing the area AR0 coming through the port PT3 is rejected by the memory controller CTL.

A request for accessing the area AR0 coming through the port PT4 is rejected by the security means M1 if the request does not come from the paired SIM card.

In the above described example the memory controller CTL, the controller PCO, the security means M1 and the sharing means M5 are shown as four distinct elements having each one a specific function. These four elements may be merged in one or several circuits. The present invention may be implemented with any combinations of one or several circuits providing the four functions.

**Figure 4** shows the architecture of a smart card of SIM type according to an example of embodiment of the invention.

The SIM card SC comprises a microprocessor MP2, a communication interface INSC, a working memory MEM2, and a non volatile memory MEM3. The communication interface INSC comprises a pad P6 able to communicate through the SWP single wire protocol. In this embodiment, the non volatile memory MEM3 stores an operating system OS, pairing means M2, management means M3 and selecting means M4.

The pairing means M2 is able to pair the SIM card with a portable electronic device CSD as described at Figure 3.

The management means M3 is able to access the area AR1 of a paired portable electronic device CSD. The management means M3 is able to write and read the area AR1 content.

The selecting means M4 is able to select a size for the area AR1 of a portable electronic device CSD.

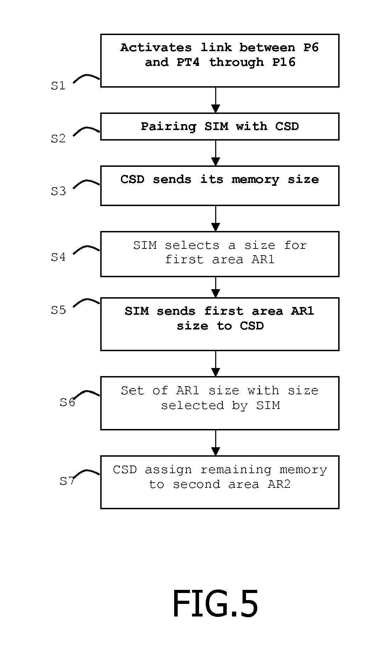

**Figure 5** shows an example of step sequence for the pairing of a SIM card and a portable electronic device CSD according to the invention. At step S1, a link is activated between the pad P6 of the SIM and the port PT4 of the portable electronic device CSD. This link is carried out through the pad P16 of the MicroSD ® connector MC of the mobile phone TH.

Then at step S2, a pairing operation is started by the pairing means M2. The pairing operation may be performed through a cryptographic algorithm. In particular, the pairing operation may be performed by using a Diffie Helmann algorithm or any asymmetric algorithm. The pairing operation may require one or several exchanges between the SIM card SC and the portable electronic device CSD.

Then at step S3, the portable electronic device CSD sends the size value of the whole memory MEM1 to the SIM card SC. At step4, the selecting means M4 selects a size for the area AR1 of the portable electronic device CSD. Then at step 5, the SIM card sends the selected size for AR1 to the portable electronic device CSD. For example, the size of MEM1 may be 2,000 Megabytes and the selected size for the area AR1 may be 500 Megabytes. At step6, the size of area AR1 is set to 500 Megabytes. Then a step7, the portable electronic device CSD assigns the remaining 1,500 Megabytes to a second area AR2. Thus the pairing allows extending the size of the memory managed by the SIM card SC.

If another smart card starts a second pairing operation with an already paired portable electronic device CSD, the security means M1 of the CSD does not authorize the second pairing operation. Thus a portable electronic device CSD cannot be paired with a plurality of SIM cards.

Advantageously, a plurality of pairing operations may be performed with a single SIM and several portable electronic devices of CSD type. In this case, the SIM card is allowed to manage several memories distributed on a plurality of portable electronic devices.

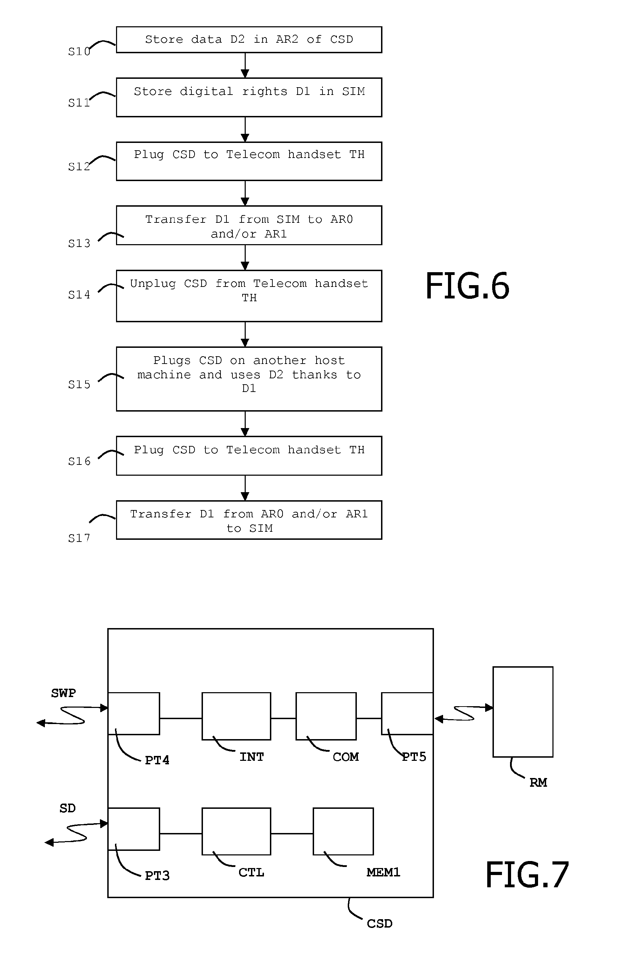

**Figure 6** shows an example of step sequence for the use of data stored in memories managed by a SIM card according to the invention. A SIM card SC and a portable electronic device CSD are assumed to be already paired. The memory MEM1 of the SIM card is assumed to comprise three areas AR0, AR1 and AR2 as shown at Figure 3. At step S10, data D2 is stored in the area AR2 of the CSD. D2 is written through the SD protocol via the port PT3 of CSD. D2 may be a series of music or video files for examples. Then at step S11, digital rights D1 are written in the non volatile memory MEM3 of the SIM card. The digital rights D1 correspond to access rights controlling access to the data D2. For example the digital rights D1 may be compliant with the OMA-SRM standard. Alternatively, the digital rights D1 may be compliant with the OMA-DRM standard. At step S12, the portable electronic device CSD is plugged to the mobile phone where the SIM card SC is inserted. Then at step S13, digital rights D1 are transferred from the SIM memory to the area AR0 of the CSD. The transfer is carried out with a secure mechanism in order to avoid the duplication of the digital rights D1. Such secure mechanism is well known of a person skilled in the art of smart card. In particular, the transfer mechanism of OMA-SRM standard may be used. The CSD is unplugged from the mobile phone at step S14. The CSD is then plugged to a second host machine compliant with the OMA-SRM standard. Thus the portable electronic device CSD provides both the data D2 and the associated digital rights D1 to the second host machine. The second host machine is now able to exploit data D2 using the digital rights D1. In the example the second host machine has rights for playing the music stored in the CSD. At step S17, digital rights D1 may be transfer back to the SIM card through a mobile phone TH. If the digital rights D1 correspond to a number of authorized plays, the digital rights D1 transferred in the SIM take into account the use of data D2 by the second host machine.

Alternatively, digital rights D1' may be transferred from the SIM memory to the area AR1 of the CSD. The digital rights D1' correspond to access rights controlling access to the data D2. Since the area AR1 may be accessed only via the port PT4, the data D2 may be used only by host machines able to communicate through the port PT4 as shown at Figures 1 and 2.

An advantage of the invention is to provide a secure mobility for the data stored in a memory managed by the smart card memory.

**Figure 7** shows the architecture of a portable electronic device CSD according to a second embodiment of the invention.

The portable electronic device CSD comprises three ports PT3, PT4 and PT5. The port PT3 is intended to communicate by using the Secure Digital ® protocol. The port PT4 is intended to communicate by using the SWP protocol. The port PT5 is intended to communicate by using a contactless protocol. The portable electronic device CSD comprises a memory MEM1 and a SD controller CTL linked to the port PT3. The SD controller CTL is able to treat data coming from and going to the port PT3 through the Secure Digital ® protocol. The SD controller CTL is able to manage data intended to be stored in the memory MEM1. The portable electronic device CSD comprises an interface controller INT linked to the port PT4. The interface controller INT is able to treat data coming from and going to the port PT4 through a single wire protocol of SWP type. The portable electronic device CSD comprises a communication controller COM linked to the port PT5 and to the interface controller INT. The communication controller COM is able to treat data coming from and going to the port PT5 through a contactless protocol. For example, the contactless protocol may comply with infrared, Bluetooth, Zigbee, Wi-fi, USB Wireless, or NFC standards. In particular, the Infrared standard may be compliant with IrDA Data Specification from the Infrared Data Association.

The controller COM could be another way to receive and send information from outside like Microphone, bare code for example.

Thus a smart card SC connected to a mobile phone TH may communicate with a remote machine RM through the portable electronic device CSD as shown at Figure 7. The link between the smart card SC and the portable electronic device CSD is provided by the mobile phone TH. This embodiment of the invention allows having a communication channel established between a smart card SC and a remote machine RM by using a combination of SWP protocol and a contactless protocol.

In a preferred embodiment of the portable electronic device CSD of Figure 7, the memory MEM1 is a large non volatile memory of flash type.

Alternatively, the portable electronic device CSD may comprise a memory MEM1 having a very small size. For example, the memory MEM1 may be of EEPROM type.

In the above described example the SD controller CTL, the communication controller COM and the interface controller INT are shown as three distinct elements having each one a specific function. These three elements may be merged in one or several circuits. The present invention may be implemented with any combinations of one or several circuits providing the three functions.

In specific cases, the present invention may apply to SD system strongly reduced with almost no memory and reduce protocol means to insure minimum compliance with the SD standard.

## Claims

1. **A portable host machine (TH)** comprising a smart card (SC) and a connector (MC), said connector (MC) having a set of pads able to communicate through a first protocol, said smart card (SC) having at least a first pad (P6) capable of communicating using a second protocol,
**characterized in that** said connector (MC) has at least an additional pad (P16) able to communicate using said second protocol and wherein said first and additional pads (P6, P16) are privately linked into said portable host machine (TH).

2. A portable host machine (TH) according to claim 1, wherein said portable host machine (TH) comprises a NFC controller (COC), wherein said NFC controller (COC) comprises first and second ports (PT1, PT2) able to communicate using the second protocol, wherein said NFC controller (COC) comprises means (ROU) able to route data between first and second ports (PT1, PT2) and wherein said first and additional pads (P6, P16) are linked via the NFC controller (COC).

3. A portable host machine (TH) according to one of claims 1 to 2, wherein said connector (MC) is a MicroSD ® connector or a MicroSDHC ® connector.

4. A portable host machine (TH) according to one of claims 1 to 3, wherein said portable host machine is a telecom handset and said smart card (SC) is a SIM card.

5. A portable host machine (TH) according to one of claims 1 to 4, wherein said second protocol is a single wire protocol and is a full duplex protocol.

6. A portable host machine (TH) according to claim 5, wherein said second protocol is of SWP type.

7. **A portable electronic device (CSD)** wherein said portable electronic device (CSD) is intended to be connected to a portable host machine (TH) according to claim 1, said portable electronic device (CSD) being intended to be paired with a smart card (SC) connected to the portable host machine (TH), said portable electronic device (CSD) comprising a non volatile memory (MEM1), said non volatile memory (MEM1) comprising first and second areas (AR1, AR2), wherein said portable electronic device (CSD) comprises sharing means (M5) able to set the size of the first area (AR1) according to a request sent by the paired smart card (SC).

8. A portable electronic device (CSD) according to claim 7, said portable electronic device (CSD) being intended to be connected to a connector (MC) having a set of pads able to communicate through a first protocol, said connector (MC) having at least an additional pad (P16) able to communicate using a second protocol, said portable electronic device (CSD) comprising a first port (PT3) capable to communicate using the first protocol,
**characterized in that** said portable electronic device (CSD) comprises a second port (PT4) able to communicate using said second protocol.

9. A portable electronic device (CSD) according to claim 8, wherein said non volatile memory (MEM1) comprises a third area (AR0), wherein said sharing means (M5) is able to set the size of the third area (AR0) according to a request sent by the paired smart card (SC), wherein said third area (AR0) is accessible only through the second port (PT4) and wherein said first and second areas (AR1, AR2) are accessible through the first port (PT3).

10. A portable electronic device (CSD) according to one of claims 8 to 9, wherein said portable electronic device (CSD) comprises security means (M1) able to refuse a pairing request sent by a smart card distinct from the paired smart card (SC).

11. A portable electronic device (CSD) according to one of claims 8 to 10, wherein said second protocol is of SWP type.

12. A portable electronic device (CSD) according to one of claims 8 to 11, said portable electronic device (CSD) comprising a third port (PT5), said third port (PT5) being able to communicate through a contactless channel, a vocal channel or a visual channel, said portable electronic device (CSD) comprising an interface controller (INT) and a communication controller (COM) and wherein said third port (PT5) is linked to the second port (PT4) via both said interface controller (INT) and said communication controller (COM).

13. A portable electronic device (CSD) according to one of claims 8 to 12, wherein said first protocol is of Secure Digital ® type.

14. A portable electronic device (CSD) according to one of claims 8 to 13, wherein said portable host machine (TH) comprises a NFC controller (COC) and wherein said second port (PT4) is used for communication exchanges between the portable electronic device (CSD) and both the paired smart card (SC) and said NFC controller (COC).

15. **A smart card (SC)** intended to be inserted in a portable host machine (TH) according to claim 1, a portable electronic device (CSD) according to claim 7 being intended to be connected to said portable host machine (TH),
**characterized in that** said smart card (SC) comprises pairing means (M2) able to pair said smart card (SC) with said portable electronic device (CSD).

16. A smart card (SC) according to claim 15, wherein said portable electronic device (CSD) comprises a non volatile memory (MEM1), said non volatile memory (MEM1) comprising first and second areas (AR1, AR2), wherein said smart card (SC) comprises management means (M3) able to access the first area (AR1) of said portable electronic device (CSD).

17. A **method** of managing data, a smart card (SC) being connected to a portable host machine (TH) according to claim 1, a portable electronic device (CSD) according to claim 7 being connected to the portable host machine (TH),
**characterized in that** said method comprises the steps:
a) in the portable host machine (TH), activating (S1) a private hardware link between the smart card (SC) and the portable electronic device (CSD),
b) pairing (S2) the smart card (SC) and the portable electronic device (CSD),
c) using (S3, S5) said private hardware link for all data exchanges between the smart card (SC) and the portable electronic device (CSD).

18. A method according to claim 17, said portable electronic device (CSD) comprising a non volatile memory (MEM1), said non volatile memory (MEM1) being intended to comprise first, second and third areas (AR1, AR2, AR0), wherein said method comprises the steps:
d) in the smart card (SC), defining (S4) a size for the first area (AR1) of the portable electronic device (CSD),
e) assigning (S6) the size defined by the smart card (SC) to the first area (AR1) of the portable electronic device (CSD).

19. A method according to claim 18, wherein said method comprises the further steps:
f) storing (S11) first data (D1) into the smart card (SC),
g) transferring (S14) first data (D1) from the smart card (SC) to the first area (AR1) and/or the third area (AR0).

20. A method according to claim 19, wherein said method comprises the further steps:
h) storing (S10) second data (D2) into the second area (AR2), said first data (D1) comprising digital rights related to the second data (D2),
i) plugging the portable electronic device (CSD) to a second host machine and using second data (D2) thanks to the first data (D1).

21. A method according to claim 20, wherein said method comprises the further steps:
j) storing said second data (D2) into the smart card (SC),
k) transferring said second data (D2) from the smart card (SC) to the second area (AR2).

22. A method according to one of claims 20 to 21, wherein said method comprises the further steps:
l) transferring said second data (D2) from second area (AR2) to the smart card (SC) and/or transferring said first data (D1) from the portable electronic device (CSD) to the smart card (SC).

23. A **method** of exchanging data between a remote machine (RM) and a smart card (SC) according to claim 15, said smart card (SC) being connected to a portable host machine (TH) according to claim 1 and a portable electronic device (CSD) according to claim 7 being connected to the portable host machine (TH), **characterized in that** said method comprises the following step:
a) exchanging data between the smart card (SC) and the remote machine (RM) through the portable electronic device (CSD), said data being sent and received by the smart card (SC) through a private hardware link, and said data being sent and received by the remote machine (RM) through a contactless channel, a vocal channel or a visual channel.
